Europäisches Patentamt

European Patent Office

Office européen des brevets

(19)

(11) Publication number: **0 234 391**
**A2**

# EUROPEAN PATENT APPLICATION

(12)

(21) Application number: **87101787.7**

(22) Date of filing: **10.02.87**

(51) Int. Cl.³: **G 01 S 13/74**

(30) Priority: **13.02.86 IT 4764986**

(43) Date of publication of application:
**02.09.87 Bulletin 87/36**

(84) Designated Contracting States:
**DE FR GB NL SE**

(71) Applicant: **SELENIA INDUSTRIE ELETTRONICHE
ASSOCIATE S.p.A.
Via Tiburtina, KM 12.400
I-00131 Roma(IT)**

(72) Inventor: **Galati, Gaspare
via C. Corvisieri 22
I-00162 Roma(IT)**

(72) Inventor: **Studer, Flavio Alessandro
via Raimondo Scintu 58
I-00169 Roma(IT)**

(74) Representative: **Gustorf, Gerhard, Dipl.-Ing.
Mühlenstrasse 1
D-8300 Landshut(DE)**

(54) Device for the evaluation of azimuth within radar systems, in particular for secondary radar systems with a single receiving channel.

(57) Device for the evaluation of an angular coordinate (azimuth) particularly suited for secondary surveillance radar systems. The device operation is based upon the calculation of the centre of symmetry of the series of replies received by the SSR.

Furthermore, the system performs automatic identification of missing replies by comparing the amplitude of the signal received with a threshold, so as to minimize the negative effects of missing replies on measurement accuracy.

As shown as an example in Figure 1, the device consists mainly of a linear transverse filter (5), the output of which, following comparison with a reference through a comparison logic (8), enables azimuth measurement through the antenna (9) line of sight.

A logic (3) which includes detection of missing replies (6) manages input data, in particular that of reference (7) calculation in presence of missing replies.

FIG. 1

EP 0 234 391 A2

Device for the evaluation of azimuth within radar
systems, in particular for secondary radar systems with
a single receiving channel

## Description

This invention relates to a device for target azimuth
measurement within a radar system, to be preferably applied in
secondary surveillance radar systems (SSR).

The invention belongs to the radar field, or more precisely, to
that of SSRs, which provide distance and azimuth of targets
equipped with on board transponders, by processing the
transponders replies to SSR radar interrogation (see Radar
Handbook, M.I. Skolnik, Mc Graw Hill Book Co, 1970, Chapter 38
- Beacons, A. Ashley & J.S. Percy, pages 38-1, 38-33).

It is a known fact that the replies received by a same target
during the timeframe in which the antenna beam sweeps over the
target are video processed, so as to recognize whether the
replies belong to the same target and to evaluate target
coordinates.

In radar systems, the electronic equipment's own noise is the
main cause for azimuth measurement errors. This error, within
SSRs, is increased by the effect of missing replies. In fact it
may happen that due to interrogation overcrowding by one or
more SSRs, a transponder may become inhibited for a few
instants or for a short while (crf. referenced Radar Handbook
Capter 38).

However within SSRs, the signal to noise ratio is generally
high (typically better than 20 dB) so that the accuracy which
can be theoretically achieved in azimuth evaluation is very
high, in the order of a few percent of antenna beamwidth, if
the effect of missing replies is absent.

In practice, traditional SSRs (crf. referenced Radar Handbook, Chapter 38, pp. 38-24, 38-25) azimuth estimate is obtained through a so called "sliding" or "moving" window, or a double threshold detector, largely described in the technical literature (reference to S. Rotella, F. Marcoz, "Analysis of a moving window detector", Alta Frequenza n. 12, Vol XXXVI, 1967 pages 1102, 1110; and G. Galati, F.A. Studer "Angular accuracy of the binary moving window radar detector", IEEE Transactions on Aerospace and Electronic Systems, Vol AES-18, No. 4, July 1982, pages 416, 422) and are characterized by noteworthy implementation simplicity.

Accuracy obtainable through traditional techniques is appreciably lower than what may be achieved, at constant input video signal (crf. referenced work by G. Galati, F.A. Studer, IEEE Trans., Vol. AES-18, No. 4) theoretically, because the moving window extractor is not too sensitive to the signal to noise ratio in angular measurement accuracy.

As an alternative to the moving window technique, target azimuth may be evaluated by adopting the monopulse radar technique described in technical literature (crf. referenced Radar Handbook, Chapter 21 - Tracking Radar, by J.H. Dunn et alii, pages 21-10, 21-33).

Monopulse technique is also applied to recently conceived SSRs (see Italian Patent Application "System for amplitude monopulse receiver angular measurement" by G. Galati and G. Iacovitti No. 48728 A/85 filed 29.10.1985) where a much greater accuracy than what is obtainable through a moving window is achieved.

However, monopulse requires radar receiver duplication and is therefore expensive when compared to a traditional single receiving channel system; therefore single channel SSRs, which consequently do not exploit the monopulse technique, are of great industrial interest.

The device presented by this invention improves upon the limitations of the moving window technique at the cost of a slightly increased implementation complexity which is however far less than that of monopulse techniques.

The device operating principle is the following:

The series of replies received from a same target is amplitude modulated by the antenna radiation diagram, which has a known shape (typically symmetrical) around the antenna line of sight. In presence of high signal to noise ratio, as in the case of SSRs, the time succession of reply amplitudes from which the azimuth datum is obtained, preserves such known pattern, less slight random deviations due to receiver noise.

Therefore azimuth estimation is equivalent to the estimation of the time instant around which the time series of replies is centred, consistently with the known antenna beam shape. Such instant may be determined simply by processing the input signal in a linear transversal filter and detecting the time instant at which the filter output swings from negative to positive values (or viceverca), i.e. through the zero reference crossing test (beam splitting technique).

In this invention, the filter pulsed response is chosen so as to minimize the angular error at constant input signal to noise ratio. In particular, the filter pulse response is defined during design as a function of the antenna beam.

As an example, without limiting to this, it may be said that a suitable choise of the filter pulsed response can be made by calculating the first derivative of the function describing the antenna pattern. The same result is achieved if the transverse filter is made up by the series of two linear filters: the first has a pulse response which coincides with the antenna pattern function i.e. a filter matched with the expected useful signal; the second is a simple differentiator.

This invention also applies to radar systems which provide a single bit quantized numeric video. In this case, the configuration of the device described in the invention does not change, as it suffices to select a suitable pulsed response of the transverse linear filter, which in this case is not directly tied to the antenna radiation pattern as it also depends on the signal to noise ratio, for which a design figure is taken.

Futhermore, this invention may also be applied in a simplified form by presenting filter characteristics with a limited number of bits, the limit case being that of a single bit plus a bit for the sign.

This invention also takes into account the following SSR characteristics:

(i) as replies provide a relevant information quantum only within a limited angle range, of the order of the antenna beamwidth, processing is limited to a finite number of samples taken within a timeframe defined on the basis of cost effectiveness;

(ii) application to SSR systems having high signal to noise ratio, gives way to a unique definition of the transverse linear filter response for the measurement, as a function of antenna radiation pattern, and is therefore independent of the unknown value of the signal to noise ratio, except in the particular case of single bit video quantization;

(iii) the estimator structure, in the version suitable for missing replies environment, includes a logic which recognizes missing replies, designed on the basis of accepted false identification probability, which inhibits the use of the estimation algorithm of data due to noise alone and takes into account missing replies in the definition of the reference level for comparison of the output of the linear filter used for the estimation. This threshold too is obtained through simple transverse linear filtering of the binary data which indicate the presence of a reply, with weights uniquely determined as a function of the antenna pattern;

(iv) estimation is performed by taking into account possible non linearity (typically logarithmic) of the radar receiver amplitude detector, often used to keep within acceptable values the dynamics of processed signals. This non linear characteristic sets, together with the antenna radiation pattern, the pulse response of the linear filters used for estimation and reference calculation, so that accuracy, compared with what can be achieved with a fully linear receiver, is not degraded.

The device described here, will therefore improve azimuth estimation accuracy appreciably compared to traditional techniques (such as moving window) adopting circuits with a complexity whith is far lower than that of monopulse techniques. The device is furthermore characterized by considerable configuration flexibility, which may match different operating environments (with or without missing

replies problem) and different characteristics (linear or non linear video signal, with dynamics or with a single bit) of the radar receiver to which it is connected.

The invention will now be described with reference to some of its presently preferred embodiments which are reported for illustrative and not limiting purposes with reference to the figures attached where:

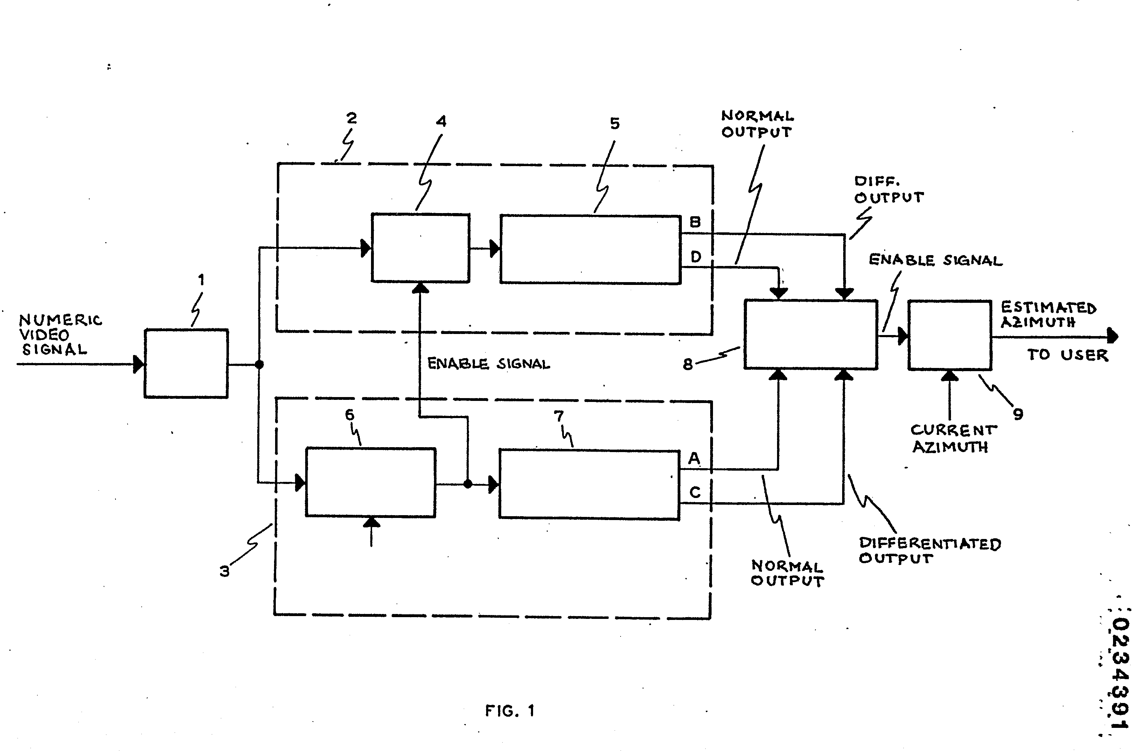

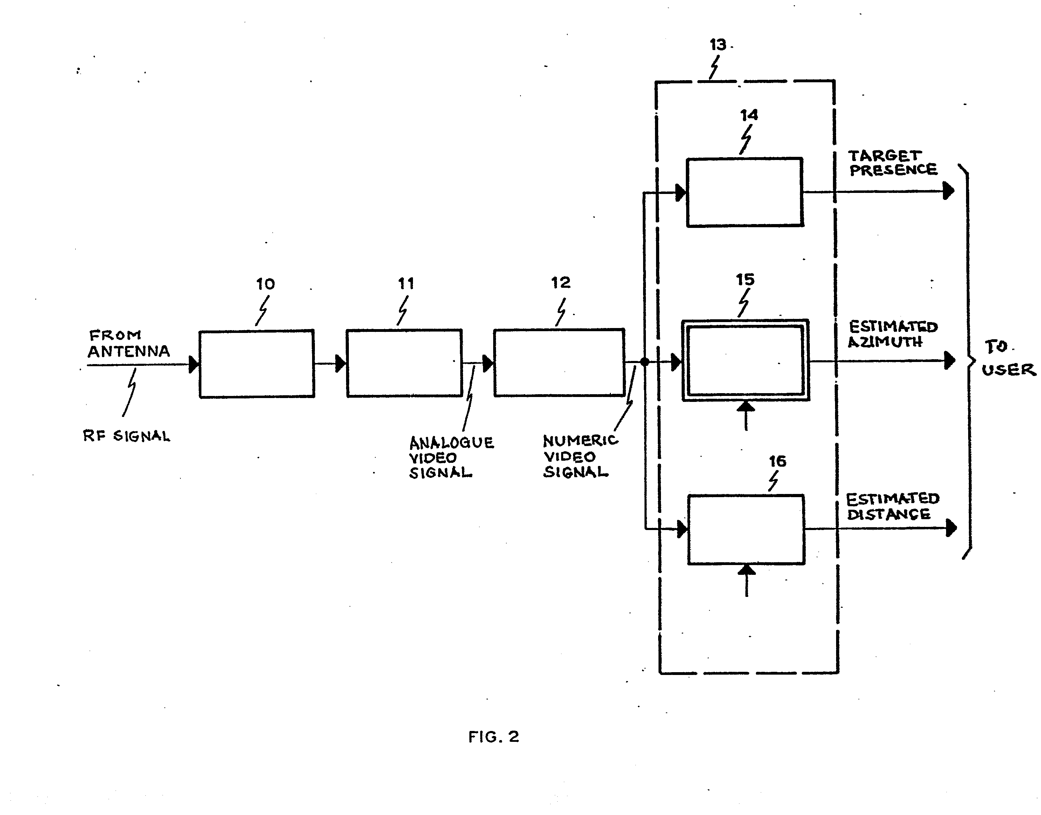

Figure 1 (already recalled in the summary) describes in detail the system block diagram in its most general configuration, which includes the logics for missing reply management,

by contrast Figure 2 shows how the estimator is inserted within a radar processor/receiver, with particular reference to an SSR, and

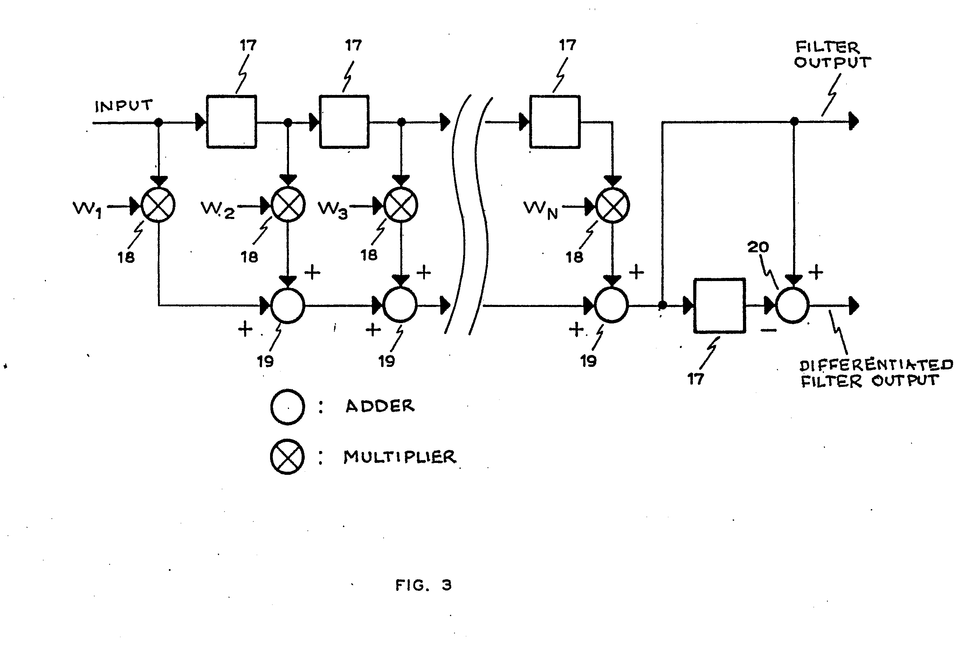

Figure 3 shows the details of the transverse filter and differentiator used in the estimator.

As shown as an example in Figure 1, the device consists mainly of a linear transverse filter 5, the output of which, following comparison with a reference through a comparison logic 8, enables azimuth measurement through the antenna 9 line of sight.

A logic 3 which includes detection of missing replies 6 manages input data, in particular that of reference 7 calculation in presence of missing replies.

As shown in Figure 2 and as known to the experts in the radar field, radio frequency signal received by the antenna crosses receiver RF-IF 10, envelope detector 11, reaches an analogue numeric converter 12 and enters processor 13 which has the purpose of detecting target presence, through a detector and reply integrator 14 and of estimating detected target coordinates through azimuth estimator 15 and distance estimator 16. Target presence indication and azimuth and distance estimate are then sent to the user (which may be a computer or an operator's display).

Figure 2 highlights prevouis and present techniques. Such techniques differ in the implementation of the estimator 15.

The preferred implementation of azimuth estimator 15 using the device presented by this invention is described in detail in the following, with reference to Figure 1.

The numeric video signal is memorized in buffer 1 as commonly done in the field of radar signal numeric processing. This signal is then sent simultaneously to two circuits, estimate channel 2 and missing reply management logic 3. Within the estimate channel 2 the signal crosses gate 4 when enable signal from block 3 is present and is then processed by linear transverse filter 5 for estimation purposes. Such filter is characterized by a pulsed response which is defined during design based upon antenna radiation channel and receiver linear or non linear characteristics; filter 5 provides a normal output (indicated as "D" in figure 1) and a differentiated output "B".

Differentiated output is obtained from the normal one calculating the difference between values taken by such normal output at two consecutive sampling instants, in accordance with current practice of approximating differentials in discrete terms. As we have seen, the numeric video signal is parallely processed by a missing reply management logic 3, which consists of a threshold comparator 6 and a linear transverse filter 7 to calculate the reference level. In particular, within comparator 6 the signal is compared with a threshold value defined during design, to recognize whether the transponder reply is present or absent. At the comparator 6 output, an enable binary logic signal is obtained, which lets the numeric video signal through gate 4 into estimate channel 2 already described. The same binary enable signal is processed by filter 7, characterized by a pulse response also set, during design, as a function of the antenna diagram and the linear or non linear receiver characteristic. Also filter 7 provides two outputs, one normal, indicated as "A" and a differentiated one labled as "C" as for filter 5.

The preferred implementation of blocks 5 and 7 is shown as an example in Figure 3 and is typical of linear transverse filters usually adopted in signal numeric processing, consisting of delay elements 17, multipliers 18, adders 19 and a subtractor 20.

The four signals at outputs A,B,C and D obtained from blocks 5 and 7 are sent to comparing logics 8 to verify whether the following condition is met:

$$A \times B - C \times D = 0$$

less a prefixed error margin.

During such check, signal B is the one which in absence of missing replies, changes sign correspondingly to the received replies centre of gravity (beam splitting technique, already mentioned in the general description); Signal C is the correction (compared to zero) of the reference level with which B is compared to take care of missing replies; signals A and D are on the contrary positive scaling factors required to compare B and C.

Comparison logic 8 provides an enable binary logic signal which transfers through gate 9 the datum which represents current azimuth (i.e. the azimuth of antenna line of sight at current time), as estimated value, toward the user.

Current azimuth datum is commonly available in radar systems through an antenna fitted transducer (encoder).

The estimated azimuth datum obtained is characterized by a constant and known error which is dependent upon the time delay introduced by buffer 1 and by estimator circuits 2, 3, 8 and 9.

Such constant and known error does not affect measurement accuracy, because it may be automatically compensated for by following processing of the datum (typically during coordinate extraction and presentation), according to radar current practice.

The block diagram of Figure 1, as we have said above, is the most general representation of the device presented by this invention, and in particular it includes missing reply management logics 2.

The estimate device presented herein may also be implemented in a simplified form, to be adopted within SSR systems which are called to operate in an environment in which the missing reply phenomenon is not too relevant (typically, in uncrowded environments, with reduced number of aircraft and/or SSR equipment). Such simplified configuration is a particular case of the general schematic shown in Figure 1, from which it can be obtained by excluding block 3 and gate 4 simplifying filter 5 and comparing logic 8, as specified in the following.

Gate circuit 4 is eliminated, still letting the numeric video signal into filter 5. Only the differentiated output "B" is of interest within such filter. Comparison logic 8 is reduced to a threshold comparator, with threshold set to zero.

In fact, as said above, when all replies are present, the comparison to be made boils down to B = 0 (less a prefixed margin error always present), which can be obtained as a particular case from Figur 1 schematic when signal C is zero, while A and D have no effect. The usefulness of such simplified configuration is twofold: it gives way to savings in implementation and, more importantly , it gives an estimate which is more accurate than obtainable through Figure 1 schematic in an environment free of missing replies.

## Claims

1. Device for radar systems azimuth estimate, to be used in particular within single channel secondary surveillance radars, characterized by estimating azimuth of a target by processing the signal received within a timeframe limited by a linear filter designed as a function of radar antenna pattern and by linear or non linear receiver characteristic, and by the capability of recognizing missing replies automatically, which is taken into account when calculating the reference level used in the logis which estimate target azimuth.

2. Device according to claim 1, wherein the numeric video is memorized in buffer (1), sent through gate (4) to a transverse filter and derivator (5) and in parallel to a missing reply management logic (3), consisting of a comparator (6) and a linear filter and differentiator (7), the outputs of which are compared within block (8) with the outputs of filter and differentiator (5) to enable transition of current azimuth datum through gate (9) toward the user.

3. Device according to claim 1 or 2, wherein linear filters and differentiators (5) and (7) consist of delay elements (17), multipliers (18), adders (19) and subtractors (20).

4. Device according to one of the preceeding claims, which may be implemented beyond what is described in the most general configuration above (which includes missing reply logics) also in a simplified configuration, (to be used in radar systems which operate in environments free of missing replies) obtained from the general case as a particular one by eliminating block (3) and (4) and changing block (8) with a comparator of output B differential with zero.

5. Device according to the preceeding claims, which may be built in configurations which process binary data, in which either numeric video or transverse filter weights or both consist of single bit words; where such configurations are identical to those described in claims above, with the only difference of weight selection, i.e. pulse response of transverse filters (5) and (7).

6. Device according to the preceeding claims, which may be built either with dedicated hardware logic or with programmed or microprogrammed (firmware/software) logic.

7. Device according to the preceeding claims, which can be applied to newly developed or existing radars with minimized costs and circuit modifications, with particular regard for secondary surveillance radars having a single channel receiver.

0234391

NUMERIC VIDEO SIGNAL

ENABLE SIGNAL

NORMAL OUTPUT

DIFF. OUTPUT

ENABLE SIGNAL

ESTIMATED AZIMUTH TO USER

CURRENT AZIMUTH

DIFFERENTIATED OUTPUT

NORMAL OUTPUT

B   D

A   C

1

2

3

4

5

6

7

8

9

FIG. 1

FIG. 2

FILTER OUTPUT

DIFFERENTIATED FILTER OUTPUT

20

17

17

$W_N$

18

19

17

17

$W_3$

18

19

17

$W_2$

18

19

INPUT

$W_1$

18

ADDER

MULTIPLIER

FIG. 3